# EUROPÄISCHE PATENTSCHRIFT

(11) **EP 3 838 934 B1**
(45) Veröffentlichungstag und Bekanntmachung des Hinweises auf die Patenterteilung: **14.05.2025**
(21) Anmeldenummer: 20215521.4
(22) Anmeldetag: 18.12.2020
(51) Int. Cl.: C08F 220/28, C09J 7/38, C09J 133/14, C08K 5/00

(54) **HAFTKLEBMASSE FÜR PAPIERVERKLEBUNGEN**
ADHESIVE COMPOSITION FOR PAPER BONDING
MATIÈRE ADHÉSIVE POUR LE COLLAGE DU PAPIER

(30) Priorität: 19.12.2019 DE 102019220303
(43) Veröffentlichungstag der Anmeldung: 23.06.2021
(73) Patentinhaber: tesa SE, 22848 Norderstedt (DE)
(72) Erfinder: PÜTZ, Benjamin, 41464 Neuss (DE); KRETZMER, Ralf, 22391 Hamburg (DE)
(74) Vertreter: tesa SE

(56) Entgegenhaltungen:
- WO-A2-95/14746
- JP-A- 2018 159 018
- JP-A- H11 323 292
- US-A- 4 388 432

## Beschreibung

Die Erfindung betrifft das technische Gebiet der Haftklebmassen, wie sie in der Technik vielfach zum temporären und dauerhaften Verbinden von Substraten genutzt werden. Spezifischer schlägt die Erfindung eine Haftklebmasse auf Basis eines speziellen Poly(meth)acrylats vor, die insbesondere für die Verklebung von Papier und darüber hinaus zur Herstellung von abwaschbaren Verklebungen geeignet ist.

Sowohl in der Produktion als auch in der Verwendung von Papieren werden vielfach Haftklebmassen eingesetzt. Wesentliche Anwendungen liegen beispielsweise im Rollenwechsel bei der Verarbeitung großer Papierrollen; hier werden Haftklebmassen in so genannten *Splicing-*Tapes verwendet, um einen unkomplizierten, möglichst fliegenden Wechsel von einer Rolle auf die nächste und so einen kontinuierlichen Prozess zu ermöglichen. Gebräuchlich sind darüber hinaus auch permanente Spleiße, die temporär oder dauerhaft im Papier verbleiben. Häufig wird auch das Papier am Beginn des Aufwickelns zur Rolle häufig an den Rollenkern geklebt (so genanntes *core starting*), oder die äußere Lage von Papierrollen wird mit einem Klebeband bei Lagerung oder Transport fixiert (so genanntes *end tabbing*)*.*

Bei Papierproduktion und Papierverarbeitung werden an die dort eingesetzten Haftklebmassen hohe Anforderungen gestellt. So sollen die Massen häufig eine hohe Anfassklebrigkeit aufweisen - man denke an den fliegenden Rollenwechsel, wo die kurze Kontaktzeit zwischen der ablaufenden und der neu herangeführten Rolle genügen muss, um eine Verklebung zwischen den beiden Papierbahnen aufzubauen, die den bei der anliegenden Bahngeschwindigkeit herrschenden Scherkräften widersteht und schließlich auch stärker ist als die Spaltkraft, die zum Öffnen des Rollenverschlusses (Spaltetiketten, so genannte Butterflies) oder des im Klebeband integrierten Spaltsystems erforderlich ist.

Natürlich sollen die Haftklebmassen auch allgemein hohe Klebkräfte aufweisen, die sich sowohl auf polaren als auch auf weniger polaren Papieren entfalten. Insbesondere für permanente Verklebungen ist auch eine hohe Alterungsstabilität erforderlich, die sich z.B. in einer hohen Widerstandsfähigkeit gegen einwandernde Calcium-Ionen aus weiß gestrichenem oder mit CaCO₃ gefülltem Papier äußert. Unter Nachhaltigkeitsgesichtspunkten ist häufig eine Wiederablösbarkeit der Klebmassen vom Papiersubstrat zumindest in Wasser (Repulpierbarkeit) erforderlich.

Der Aspekt der Wiederablösbarkeit einer Haftklebmasse vom zu verklebenden Substrat ist auch in technischen Gebieten außerhalb der Papierindustrie von besonderem Interesse; beispielsweise ist dies auch eine zunehmend häufige Anforderung an Verklebungen von Batterien bzw. Akkus in elektronischen Geräten wie Mobiltelefonen etc.

Es hat daher nicht an Versuchen gefehlt, Haftklebmassen zur Verfügung zu stellen, die dem beschriebenen Anforderungsprofil genügen.

WO 2014/001096 A1 beschreibt eine Haftklebemasse, umfassend zumindest eine Polymerkomponente auf Basis einer Monomermischung enthaltend mindestens folgende Monomere:
i.a) 50 bis 89,5 Gew.-% zumindest einen Acrylsäureester und/oder Methacrylsäureester mit der folgenden Formel:

   CH₂=C(R₁)(COOR₂),

   wobei
   R₁ = Hund R₂ ein linearer Alkylrest mit 2 bis 10 C-Atomen oder ein verzweigter, nichtcyclischer Alkylrest mit mindestens 4 C-Atomen ist
      und/oder
   R₁ = CH₃ und R₂ ein linearer Alkylrest mit 8 bis 10 C-Atomen oder ein verzweigter, nichtcyclischer Alkylrest mit mindestens 10 C-Atomen ist,
i.b) 5 bis 20 Gew.-% zumindest ein N-Alkyl-substituiertes Acrylamid
i.c) 5 bis 25 Gew.-% zumindest ein Acrylsäureester und/oder Methacrylsäureester mit der folgenden Formel:

   CH₂=C(R₃)(COOR₄),

   wobei R₃ = H oder CH₃ und R₄ ein linearer Alkylrest mit mindestens 12 C-Atomen ist;
i.d) 0,5 bis 5 Gew.-% Acrylsäure und/oder Methacrylsäure,
wobei die Mengenangaben jeweils auf die Monomermischung bezogen sind und diese Haftklebmasse für die Verklebung flexibler Druckplatten vorgesehen ist.

WO 95/14746 A2 hat eine wasserlösliche oder wasserdispergierbare Haftklebmasse zum Gegenstand, die ein normal anfassklebriges Copolymer aus einem wasserlöslichen Basismonomer und einem wasserdispergierbaren Makromer umfasst.

EP 0 699 726 A2 offenbart eine wasserlösliche Haftklebmasse, enthaltend
100 Gew.-Teile eines wasserlöslichen Copolymerisats aus
   a) 65 - 95 Gew.-% einer Vinylcarbonsäure,
   b) 5 -35 Gew.-% eines Alkyl(meth)acrylsäureesters mit 1-12 C-Atomen im Alkylrest und
   c) 0,05-5,0 Gew.-% eines polymerisationsfähigen Fotoinitiators
   und
30 bis 150 gew.-Teile eines wasserlöslichen Weichmachers mit einer Molmasse bis 4.000 Dalton.

EP 1 489 153 A1 beschreibt eine repulpierbare Haftklebmasse, die zumindest ein Blockcopolymer auf Polyacrylatbasis umfasst.

JP 2018 159018 A offenbart eine Haftklebmasse, die ein Copolymer enthält, das 61 bis 93 Gew.-% Alkoxyalkyl(meth)acrylat, 6 bis 19 Gew.-% eines N-haltigen Monomers und 1 bis 20 Gew.-7% einer vernetzenden funktionellen Gruppe umfasst, und beschreibt die Herstellung eines Haftklebstoffs, enthaltend ein Polymer aus 2-Methoxyethylacrylat, Dimetheylacrylamid und 2- Hydroxyethylacrylat.

Die Verwendung von Haftklebmassen zur Herstellung wasserlöslicher Verklebungen wird in WO 95/14746 A2, JP H11 323292 sowie US 4 388 432 A beschrieben.

Es besteht ein anhaltender Bedarf an Klebebändern mit gutem Eigenschaftsprofil für Papierverklebungen. Aufgabe der Erfindung war es, eine repulpierbare Haftklebmasse zur Verfügung zu stellen, die sich sowohl auf polaren als auch unpolaren Papieren gut verwenden lässt und lagerungsstabil ist.

Der Lösung der Aufgabe liegt der Gedanke zugrunde, ein Poly(meth)acrylat mit einer speziellen zugrundeliegenden Monomerenzusammensetzung in einer Haftklebmasse zu verwenden. Ein erster und allgemeiner Gegenstand der Erfindung ist somit eine Haftklebmasse, die mindestens ein Polymer enthält, dessen zugrundeliegende Monomerenzusammensetzung
a) 10 bis 30 Gew.-% mindestens einer Verbindung gemäß der Formel (I)

   CH₂=CH-C(O)NR¹R² (I),

   worin R¹ für eine unsubstituierte Alkylgruppe, eine Hydroxyalkylgruppe oder einen Acetonylrest und R² für ein Wasserstoffatom, eine unsubstituierte Alkylgruppe, eine Hydroxyalkylgruppe, einen Acetonylrest oder eine Aminoalkylgruppe stehen;
b) 60 bis 80 Gew.-% Ethyldiglycolacrylat ; und
c) 0,5 bis 10 Gew.-% mindestens eines Monomers ausgewählt aus der Gruppe bestehend aus Acrylsäure, Methacrylsäure und (C₂-C₄-Hydroxyalkyl)(meth)acrylaten umfasst. Wie sich gezeigt hat, weisen derartige Haftklebmassen neben einer guten Repulpierbarkeit einen hohen Tack auf und zeigen hohe Klebkräfte auf verschiedenen Papieren sowie gute Scherfestigkeiten. Zudem zeigen sie eine geringe Neigung, in Papier hinein zu migrieren, und haben sich als widerstandsfähig gegen das Einwandern von Calcium-Ionen erwiesen.

Unter einer Haftklebmasse bzw. einem Haftklebstoff wird erfindungsgemäß, wie im allgemeinen Sprachgebrauch üblich, ein Stoff verstanden, der zumindest bei Raumtemperatur dauerhaft klebrig sowie klebfähig ist. Charakteristisch für einen Haftklebstoff ist, dass er durch Druck auf ein Substrat aufgebracht werden kann und dort haften bleibt, wobei der aufzuwendende Druck und die Einwirkdauer dieses Drucks nicht näher definiert werden. Im allgemeinen, grundsätzlich jedoch abhängig von der genauen Art des Haftklebstoffs sowie des Substrats, der Temperatur und der Luftfeuchtigkeit, reicht die Einwirkung eines kurzfristigen, minimalen Drucks, der über eine leichte Berührung für einen kurzen Moment nicht hinausgeht, um den Haftungseffekt zu erzielen, in anderen Fällen kann auch eine längerfristige Einwirkdauer eines höheren Drucks notwendig sein.

Haftklebmassen haben besondere, charakteristische viskoelastische Eigenschaften, die zu der dauerhaften Klebrigkeit und Klebfähigkeit führen. Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad der Haftklebemasse als auch von der Geschwindigkeit und Dauer der Deformation sowie von der Temperatur.

Der anteilige viskose Fluss ist zur Erzielung von Adhäsion notwendig. Nur die viskosen Anteile, häufig hervorgerufen durch Makromoleküle mit relativ großer Beweglichkeit, ermöglichen eine gute Benetzung und ein gutes Auffließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Adhäsion. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander werden die mittels Dynamisch Mechanischer Analyse (DMA) ermittelbaren Größen Speichermodul (G') und Verlustmodul (G") herangezogen. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel δ bezeichnet.

Der Speichermodul G' ist wie folgt definiert: G' = (τ/γ) •cos(δ) (τ = Schubspannung, γ = Deformation, δ = Phasenwinkel = Phasenverschiebung zwischen Schubspannungs- und Deformationsvektor). Die Definition des Verlustmoduls G" lautet: G" = (τ/γ) • sin(δ) (τ = Schubspannung, γ = Deformation, δ = Phasenwinkel = Phasenverschiebung zwischen Schubspannungs- und Deformationsvektor).

Eine Masse gilt insbesondere dann als Haftklebmasse und wird im Sinne der Erfindung insbesondere dann als solche definiert, wenn bei 23 °C im Deformationsfrequenzbereich von 10⁰ bis 10¹ rad/sec sowohl G' als auch G" zumindest zum Teil im Bereich von 10³ bis 10⁷ Pa liegen. "Zum Teil" heißt, dass zumindest ein Abschnitt der G'-Kurve innerhalb des Fensters liegt, das durch den Deformationsfrequenzbereich von einschließlich 10⁰ bis einschließlich 10¹ rad/sec (Abszisse) sowie den Bereich der G'-Werte von einschließlich 10³ bis einschließlich 10⁷ Pa (Ordinate) aufgespannt wird, und wenn zumindest ein Abschnitt der G"-Kurve ebenfalls innerhalb des entsprechenden Fensters liegt.

Erfindungsgemäß umfasst die Monomerenzusammensetzung des Polymers 10 bis 30 Gew.-% mindestens einer Verbindung gemäß der Formel (I)

CH₂=CH-C(O)NR¹R² (I),

worin R¹ für eine unsubstituierte Alkylgruppe, eine Hydroxyalkylgruppe oder einen Acetonylrest und R² für ein Wasserstoffatom, eine unsubstituierte Alkylgruppe, eine Hydroxyalkylgruppe, einen Acetonylrest oder eine Aminoalkylgruppe stehen. Sofern mehrere derartige Monomere enthalten sind, umfasst die Monomerenzusammensetzung Monomere a) zu insgesamt 10 bis 30 Gew.-%. Mit dem erfindungsgemäßen Gewichtsanteilsbereich der Monomere a) wird insbesondere eine gute Anfassklebrigkeit (Tack) der Haftklebmasse und ihre gute Repulpierbarkeit sichergestellt. Bevorzugt umfasst die Monomerenzusammensetzung des Polymers 15 bis 28 Gew.-% mindestens einer Verbindung gemäß der Formel (I). Sofern mehrere derartige Monomere enthalten sind, umfasst die Monomerenzusammensetzung Monomere a) bevorzugt zu insgesamt 15 bis 28 Gew.-%.

Bevorzugt ist die Verbindung gemäß der Formel (I) ausgewählt aus der Gruppe bestehend aus N-Methylacrylamid, N-Ethylacrylamid, N-Hydroxyethylacrylamid, Diacetonylacrylamid, N-Isopropylacrylamid, N-Ethyl-N-aminoethylacrylamid, N-Ethyl-N-hydroxyethylacrylamid, N,N-Dimethylacrylamid, N,N-Dihydroxymethylacrylamid, N,N-Diethylacrylamid, N,N-Dihydroxyethylacrylamid.

In einer Ausführungsform stehen R¹ und R² unabhängig voneinander für eine unsubstituierte Alkylgruppe; besonders bevorzugt ist die Verbindung gemäß der Formel (I) N,N-Dimethylacrylamid.

Bevorzugt umfasst die Monomerenzusammensetzung als Monomer c) mindestens Acrylsäure oder 2-Hydroxyethylacrylat. Sofern mehrere Monomere c) enthalten sind, umfasst die Monomerenzusammensetzung Monomere c) zu insgesamt 0,5 bis 10 Gew.-%.

Die dem Polymer der erfindungsgemäßen Haftklebmasse zugrundeliegende Monomerenzusammensetzung kann darüber hinaus bis zu 10 Gew.-% Acrylsäurealkylester mit 1 bis 4 C-Atomen im Alkylrest umfassen.

In einer Ausführungsform umfasst die dem Polymer der erfindungsgemäßen Haftklebmasse zugrundeliegende Monomerenzusammensetzung
a) 10 bis 30 Gew.-% N,N-Dimethylacrylamid;
b) 60 bis 80 Gew.-% Ethyldiglycolacrylat; und
c) Acrylsäure und/oder 2-Hydroxyethylacrylat zu insgesamt 0,5 bis 10 Gew.-%,
wobei die Gewichtsanteile selbstverständlich jeweils auf das Gesamtgewicht der Monomerenzusammensetzung bezogen sind.

Das Polymer der erfindungsgemäßen Haftklebmasse ist bevorzugt vernetzt. Besonders bevorzugt ist das Polymer thermisch vernetzt. Eine thermische Vernetzung kann unter wesentlich milderen Bedingungen durchgeführt werden als z.B. eine strahlungsinduzierte Vernetzung, die gelegentlich auch zerstörend wirken kann. Erfindungsgemäß ist es aber auch möglich, eine Vernetzung des Polyacrylats ausschließlich oder zusätzlich durch aktinische Strahlung zu bewirken, wobei gegebenenfalls erforderliche oder fördernde Vernetzersubstanzen zugesetzt werden können, z.B. UV-Vernetzer.

Bevorzugt ist das Polymer der erfindungsgemäßen Haftklebmasse also thermisch vernetzt, d.h. mittels Substanzen, die unter dem Einfluss thermischer Energie eine Vernetzungsreaktion ermöglichen (initiieren) und/oder fördern. Bevorzugte thermische Vernetzer sind koordinative Vernetzer; besonders bevorzugt ist das Polymer mit einem oder mehreren Metallchelaten, insbesondere mit mindestens einem Aluminiumchelat und/oder mindestens einem Titanchelat thermisch vernetzt.

Die koordinativen Vernetzter, insbesondere Aluminiumchelate, werden bevorzugt in einer Menge von 0,1 bis 1 Gew.-Teilen, besonders bevorzugt von 0,2 bis 0,8 Gew.-Teilen, jeweils bezogen auf 100 Gew.-Teile des Polymers (lösemittelfrei), eingesetzt. In einer Variante werden die koordinativen Vernetzer, insbesondere Titanchelate, bevorzugt in einer Menge von 1 bis 4 Gew.-Teilen, besonders bevorzugt von 1,7 bis 3,3 Gew.-Teilen, jeweils bezogen auf 100 Gew.-Teile des Polymers (lösemittelfrei), eingesetzt.

Ganz besonders bevorzugt ist das Polymer mit Aluminiumacetylacetonat oder Titandiisopropoxidbis(acetylacetonat) vernetzt.

Zur Herstellung der Polymere der erfindungsgemäßen Haftklebmasse können prinzipiell alle radikalischen oder radikalisch-kontrollierten Polymerisationen eingesetzt werden, ebenso auch Kombinationen verschiedener Polymerisationsverfahren. Neben der konventionellen, freien radikalischen Polymerisation sind dies z. B. auch die ATRP, die Nitroxid/TEMPOkontrollierte Polymerisation oder der RAFT-Prozess. Bevorzugte Lösemittel für die Polymerisation sind Wasser, Aceton, Isopropanol, Ethanol und Ethylacetat sowie deren beliebige Mischungen.

Das Polymer der erfindungsgemäßen Haftklebmasse weist bevorzugt eine gewichtsmittlere Molmasse M_{w} von 300.000 bis 2.000.000 g/mol auf.

In einer Ausführungsform enthält die erfindungsgemäße Haftklebmasse mindestens ein Klebharz. Klebharze, auch bezeichnet als klebrig machende Harze, werden Haftklebmassen häufig zur Feinjustierung der Haftklebeeigenschaften beigemischt.

Unter "Harzen" werden insbesondere solche oligo- und (niedrig)polymeren Verbindungen verstanden, deren zahlenmittlere Molmasse Mₙ nicht mehr als 5.000 g/mol beträgt. Selbstredend werden kurzkettige Polymerisationsprodukte, die bei der Polymerisation zur Herstellung des Polymers der erfindungsgemäßen Haftklebmasse entstehen, nicht unter den Begriff "Harze" subsummiert.

Klebharze haben häufig Erweichungspunkte im Bereich von 80 bis 150 °C. Die Angaben zum Erweichungspunkt T_{E} von oligomeren und polymeren Verbindungen, wie zum Beispiel der Harze, beziehen sich auf das Ring-Kugel-Verfahren gemäß DIN EN 1427:2007 bei entsprechender Anwendung der Bestimmungen (Untersuchung der Oligomer- bzw. Polymerprobe statt Bitumens bei ansonsten beibehaltener Verfahrensführung). Die Messungen erfolgen im Glycerolbad.

In einer Ausführungsform enthält die erfindungsgemäße Haftklebmasse mindestens ein Klebharz ausgewählt aus der Gruppe bestehend aus Kolophonium und Kolophoniumderivaten wie Kolophoniumestern, auch durch z. B. Disproportionierung oder Hydrierung stabilisierten Kolophoniumderivaten; Terpenphenolharzen; Acrylatharzen und Zuckerharzen.

Klebharze sind in der erfindungsgemäßen Haftklebmasse bevorzugt zu insgesamt maximal 30 Gew.-% enthalten. Es können sowohl ein oder mehrere Klebharze enthalten sein.

Bevorzugt ist die erfindungsgemäße Haftklebmasse allerdings frei von Klebharzen.

Zur Optimierung der Eigenschaften der erfindungsgemäßen Haftklebemasse kann diese zudem weitere geläufige Additive wie Füllstoffe, beispielsweise elektrisch leitfähige Füllmaterialien, thermisch leitfähige Füllmaterialien und dergleichen oder Flammschutzmittel, beispielweise Ammoniumpolyphosphat und dessen Derivate, enthalten.

Sofern die erfindungsgemäße Haftklebmasse eingefärbt werden soll, kann sie auch wasserlösliche Pigmente oder andere Farbstoffe enthalten.

Die erfindungsgemäße Haftklebmasse kann darüber hinaus auch geschäumt vorliegen und entsprechende Treibmittel, insbesondere Treibgase; Mikrokörper, insbesondere Mikrohohlkugeln, aus z.B. Glas, Keramik oder Flugasche; expandierbare bzw. expandierte Mikrohohlkugeln mit einer thermoplastischen Polymerhülle und dergleichen enthalten.

Ein weiterer Gegenstand der Erfindung ist ein Klebeband, das eine erfindungsgemäße Haftklebmasse umfasst.

Der allgemeine Ausdruck "Klebeband" umfasst im Sinne dieser Erfindung alle flächigen Gebilde wie in zwei Dimensionen ausgedehnte, zumindest einseitig und vollflächig oder zum Teil mit Haftklebmasse beschichtete Folien oder Folienabschnitte, Papiere oder Papierabschnitte, Bänder mit ausgedehnter Länge und begrenzter Breite, Bandabschnitte, Etiketten, Stanzlinge und dergleichen.

Im einfachsten Fall besteht ein erfindungsgemäßes Klebeband nur aus einer erfindungsgemäßen Haftklebmasse (Transferklebeband). Um das zu einer Tellerrolle aufgerollte oder zu einer Spule kreuzgewickelte Klebeband applizieren zu können, ohne dass es mit sich selbst verklebt, ist die Haftklebmasse dabei bevorzugt mit mindestens einem Releaseliner abgedeckt.

Ein erfindungsgemäßes Klebeband kann neben einer erfindungsgemäßen Haftklebmasse auch mindestens einen Träger und gegebenenfalls auch noch weitere Schichten, beispielsweise weitere Haftklebmasseschichten, weitere verstärkende Trägerschichten etc. umfassen.

In einer Ausführungsform umfasst das Klebeband einen Träger und eine Schicht einer erfindungsgemäßen Haftklebmasse. Das Material des Trägers ist bevorzugt ausgewählt aus der Gruppe bestehend aus Polyethylen (PE), Polypropylen (PP), Polyethylenterephthalat (PET) und Papier. Insbesondere ist das Material des Trägers Papier.

In der Ausführungsform mit Träger kann das erfindungsgemäße Klebeband als einseitiges oder doppelseitiges Klebeband ausgestaltet sein. Weiter kann das erfindungsgemäße Klebeband auch als spaltbares Klebeband ausgestaltet sein.

Auch in der Ausführungsform mit Träger ist zumindest eine Haftklebmasse des Klebebandes bevorzugt mit einem Releaseliner abgedeckt, um ein problemloses Abwickeln zu ermöglichen und die Haftklebmasse(n) vor Verschmutzung zu schützen. Releaseliner bestehen üblicherweise aus einer ein- oder beidseitig silikonisierten Kunststofffolie (z.B. PET oder PP) oder einem silikonisierten Papierträger. Sie werden nicht dem Klebeband zugerechnet, sondern sind nur temporär als Hilfsmittel mit diesem verbunden.

Besonders bevorzugt ist in einem erfindungsgemäßen Klebeband die erfindungsgemäße Haftklebmasse mit einem repulpierbaren Releaseliner abgedeckt.

Ein weiterer Gegenstand der Erfindung ist die Verwendung einer erfindungsgemäßen Haftklebmasse und/oder eines erfindungsgemäßen Klebebandes zur Herstellung wasserlöslicher Verklebungen. Unter "wasserlöslichen Verklebungen" werden Verklebungen verstanden, bei denen sich unter dem Einfluss von Wasser die verklebten Substrate mit überschaubarem und technisch sinnvollem zeitlichen und apparativen Aufwand voneinander lösen lassen. Der Begriff schließt nicht ein, dass sich die Haftklebmasse bzw. das Klebeband rückstandsfrei vom Substrat entfernen lässt. Bevorzugt lässt sich jedoch die erfindungsgemäße Haftklebmasse rückstandsfrei von einem mit ihr verklebten Substrat entfernen. Bevorzugte Substrate in diesem Zusammenhang sind Papiere und Bestandteile von Batteriezellen.

Ein weiterer Gegenstand der Erfindung ist die Verwendung einer erfindungsgemäßen Haftklebmasse und/oder eines erfindungsgemäßen Klebebandes zur Herstellung repulpierbarer Verklebungen.

Die erfindungsgemäßen Verwendungen umfassen bevorzugt die Verwendung einer erfindungsgemäßen Haftklebmasse und/oder eines erfindungsgemäßen Klebebandes zur Herstellung von Verklebungen, wobei mindestens eines der zu verklebenden Substrate Papier ist. Besonders bevorzugt sind beide zu verklebenden Substrate Papier. Bevorzugte Verklebungen in diesem Kontext sind zum Beispiel die Verklebung von in z-Richtung spaltbaren Papieren an Papierrollen, die insbesondere dem temporären Rollenverschluss dienen; die Herstellung permanenter Splice zwischen zwei Papierrollen; Verklebungen von weiß gestrichenem oder mit Calciumcarbonat gefülltem Papier, das Ankleben von Papier an einen Rollenkern (*core starting*) und das Fixieren der äußeren Papierlage einer Papierrolle (*end tabbing*)*.*

### Beispiele

### Messmethoden

### Gelpermeationschromatographie (GPC, Messmethode A):

Die Angaben von zahlenmittleren und gewichtsmittleren Molekulargewichten Mₙ, M_{w} in dieser Schrift beziehen sich auf die Bestimmung per Gelpermeationschromatographie.

Die Bestimmung erfolgt an 100 µL klarfiltrierter Probe (Probenkonzentration 0,5 g/L). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 10 µm, ID 8,0 mm · 50 mm verwendet. Zur Auftrennung werden Säulen des Typs PSS-SDV, 5 µm, 10³ Å (SN9090201) sowie 5 µm, 10² Å (SN9090200) mit jeweils ID 8,0 mm · 300 mm eingesetzt (Säulen der Firma Polymer Standards Service; Detektion mittels Differentialrefraktometer PSS-SECurity 1260 RID). Die Durchflussmenge beträgt 0,5 mL pro Minute. Die Kalibrierung erfolgt gegen PMMA-Standards (Polymethylmethacrylat-Kalibrierung).

### Bestimmung der Repulpierbarkeit gemäß Tappi UM 213 (Messmethode B):

Als Testpapier wurde *"fluffed pulp"* (Co. Machery-Nagel MN 270, 270 g/m²) eingesetzt.

Es wurde ein Dreischichtverbund hergestellt, indem das Testpapier von beiden Seiten mit der zu untersuchenden Klebmasse vollflächig verklebt wurde. Die so präparierten Proben wurden in 13 x 13 mm große Stücke geschnitten und wurden mit Testpapierstücken derselben Größe in einem Becher bis zu einem Gewicht von 15 g aufgefüllt.

Die Proben wurden mit 500 ml Leitungswasser in einen Mixer (Waring Blender Model 34BL47) gegeben.

Anschließend wurde 20 s mit ca. 15.000 U/min gemischt. Der Mischer wurde dann angehalten und Papierreste von den Rändern des Mixers mit Leitungswasser in die Pulpe zurückgespült. Dies wurde zweimal wiederholt, so dass eine Mischzeit von insgesamt 60 s erreicht wurde. Die so erhaltene Pulpe wurde als Pulpe 1 bezeichnet.

Die gesamte Pulpe 1 wurde in einen Disperger gegeben, in dem 2 | Leitungswasser vorgelegt waren. Es wurde mit Leitungswasser nachgespült, um die Pulpe 1 rückstandsfrei zu überführen. Der Disperger wurde dann mit Leitungswasser auf 5 | aufgefüllt. Es wurde 1 min dispergiert, anschließend wurden fünf Bechergläser mit je 770 ml der so verdünnten Pulpe 1 befüllt, von denen der erste, dritte und fünfte zur Herstellung von Testbögen verwendet wurden.

Zu diesem Zweck wurde der Inhalt eines Becherglases in einen Zylinder gegeben und mit Leitungswasser auf 7 | aufgefüllt. Anschließend wurde für 20 s Luft durchgeblasen und eine Wartezeit von 20 s eingehalten, um den Schaum sich absetzen zu lassen und eine Selbstorientierung der Fasern zu ermöglichen. Dann wurde das Wasser durch ein in den Boden des Zylinders eingelassenes Sieb abgesaugt und anschließend für 1 min Vakuum angelegt.

Der frisch entstandene Bogen wurde mit einem Deckkarton (Chromo-Ersatzkarton, 240 mm Durchmesser, Estanit) bedeckt (glatte Seite unten) und mit einer 2 kg-Stahlrolle überrollt. Der entstandene Verbund wurde entnommen und die freie Seite mit einem Deckpapier (Papier B13-c, 205 mm Durchmesser, Estanit) bedeckt. Dieser Verbund wurde für ca. 5 min in einem Trockner bei 100 °C und unter Vakuum getrocknet.

Nach dem Trocknen wurden die Deckcartons vorsichtig abgelöst und der Testbogen auf Faserausriss untersucht. Faserausriss indiziert Restklebrigkeit, die durch ungenügende Repulpierbarkeit der Klebmasse hervorgerufen wird. Idealerweise lassen sich die Deckcartons störungsfrei entfernen, und der Testbogen weist zwei völlig glatte Seiten auf. Ein geringfügiger Faserausriss wurde als noch ausreichend angesehen.

Der Testbogen wurde ferner sowohl im Durchlicht als auch im Auflicht auf Partikel (Stippen) untersucht. Um den Test zu bestehen, durften keine Partikel im Testbogen erkennbar sein.

Als Testergebnis wurde "Repulpierbar ja/nein" festgehalten.

### Klebkraft (Messmethode C):

Die Bestimmung der Klebkraft erfolgte bei 23 °C +/- 1 °C Temperatur und 50 % +/- 5 % rel. Feuchte.

Die verwendeten Papiersubstrate wurden zuvor ständig im Prüflklima gelagert.

Es wurden folgende Papiersubstrate eingesetzt:
- Etikettenpapier Raflatac 1600.9, verklebt auf einer planen PE-Platte;
- CaCO₃-haltiges Papier: MediaPrint Silk 250 g, Stora Enso Uetersen, 100 % CaCO₃ im Strich; auf einer PE-Platte mit tesa^{®}4965 fixiert;
- Tapetenoberpapier 44540, 90 g/m², Koehler SE; auf einer PE-Platte mit tesa^{®}4965 fixiert.

Ein 20 mm breiter und 250 mm langer Streifen der zu untersuchenden Klebmasse wurde auf dem betreffenden Papier aufgebracht Der Haftklebestreifen wurde zweimal mit einem Anpressdruck entsprechend einem Gewicht von 2 kg auf das Substrat aufgedrückt. Die zu untersuchende Klebmasse wurde anschließend
- sofort und
- bei der Messung auf CaCO₃-haltigem Papier zusätzlich nach Lagerung der Verklebung für 3 d bei 40 °C/80 % relativer Feuchte und anschließend 20 h im Prüfklima
mit einer Geschwindigkeit von 300 mm/min und in einem Winkel von 180 ° vom Papiersubstrat abgezogen. Die dafür benötigte Kraft wurde dabei mit einer Zugprüfmaschine gemessen. Die Messergebnisse sind in N/cm angegeben und sind gemittelt aus drei Messungen.

### Spaltkraft (Messmethode D):

Bei diesem Test wird die Spaltfestigkeit eines Papiers in z-Richtung ermittelt. Die Spaltfestigkeit bzw. Spaltkraft ist die Kraft, die notwendig ist, um den Papierkörper in z-Richtung zu spalten.

Die zu untersuchende Klebmasse wurde beidseitig durch initiales Anstreichen mit dem Finger zur Vermeidung von Lufteinschlüssen und anschließendes zweimaliges Überrollen mit einem Handroller auf ein Spaltpapier (in z-Richtung spaltbares Papier, 69 µm, 73 g/m², Spaltarbeit < 30 cN/cm) aufgebracht. Diese Verklebung wurde so hergestellt, dass auf einer Seite die Enden des Klebmassestreifens über den Prüfkörper hinausragten und unter Falten auf sich selbst zu einem Anfasser verklebt werden konnten. Die Messungen wurden
- sofort sowie
- nach Lagerung des Prüfkörpers für 1 Monat bei 40 °C und 80 % relativer Feuchte
durchgeführt.

Mit einem Stahllineal wurden aus dem Verbund 15 mm breite Streifen mit einer Länge von 20 cm herausgeschnitten. Die Anfasser wurden per Hand auseinandergezogen, bis ein Spalten des Papiers erkennbar wurde.

Der Prüfkörper wurde an den Anfassern frei hängend oben und unten in eine Zugprüfmaschine eingespannt und der Streifen mit einer Geschwindigkeit von 300 mm/min auseinandergezogen (Messklima 23 °C, 50 % relative Feuchte).

Die dazu benötigte Kraft wurde gemessen und ist in Tabelle 2 als Mittelwert aus fünf Messungen angegeben.

### Tack - Rolling Ball - Test (Messmethode E):

Bei diesem Test rollte eine Stahlkugel mit einem Gewicht von 5,6 g von einer 65 mm hohen Rampe auf einen waagerechten Streifen der zu prüfenden Klebmasse. Die Strecke bis zum Stillstand der Kugel wurde gemessen (Prüfklima 23 °C, 50 % relative Feuchte).

Die Kugeln wurden vor der Messung mit Zellstoff und Aceton gereinigt und 30 min offen im Prüfklima konditioniert.

Die Klebmasse wurde vor der Messung 1 Tag im Prüfklima konditioniert.

### Herstellung der Klebmassen:

Ein für radikalische Polymerisationen konventioneller 300 L-Reaktor wurde mit insgesamt 100 kg der in Tabelle 1 angegebenen Monomeren entsprechend der dort ebenfalls angegebenen Zusammensetzung sowie 72,4 kg Ethanol/Wasser (70:30) befüllt. Nach 45minütiger Durchleitung von Stickstoffgas unter Rühren wurde der Reaktor auf 58 °C hochgeheizt und 50 g Vazo^{®} 67 hinzugegeben. Anschließend wurde die Manteltemperatur auf 80 °C erhöht und die Reaktion konstant bei einer Manteltemperatur von 70 °C durchgeführt. Nach 1 h Reaktionszeit wurden wiederum 50 g Vazo^{®} 67 hinzugegeben. Zur Reduktion der Restinitiatoren wurden nach 6 h nochmals 50 g Vazo^{®} 67 hinzugegeben. Die Reaktion wurde nach 24 h Reaktionszeit abgebrochen und auf Raumtemperatur abgekühlt. Die Lösung wurde auf einen Feststoffgehalt von 30 Gew.-% eingestellt. Anschließend wurde der jeweils angegebene Vernetzer eingerührt.

Die erhaltene Zusammensetzung wurde in Lösung mittels Kommarakel auf eine silikonisierte PET-Folie beschichtet. Das Lösemittel wurde in einem Trockenkanal (20 min, 80 °C) entfernt. Die derart erhaltene Masse wurde als zu untersuchende Klebmasse auf ein bei den Testmethoden jeweils angegebenes Backing laminiert, das Auftragsgewicht betrug 50 g/cm².

**Tabelle 1: Zusammensetzung der Klebmassen**

| Nr. | Monomere (Gew.-%, bezogen auf die Monomerenzusammensetzung) | | | | | Vernetzer (Gew.-%, bezogen auf Polymer) | |
|---|---|---|---|---|---|---|---|
| | Acrylsäure | 2-Hydroxyethylacrylat | N,N-Dimethylacrylamid | Ethyldiglykolacrylat | n-Butylacrylat | Aluminiumacetylacetonat | Titandiisopropoxid-bis(acetyl-acetonat) |
| 1* | 5 | | | 95 | | 0,33 | |
| 2* | 10 | | | 90 | | 0,33 | |
| 3* | | 22 | 28 | 35 | 15 | 0,33 | |
| 4 | 5 | | 20 | 75 | | 0,33 | |
| 5 | 5 | | 30 | 65 | | 0,33 | |
| 6 | 10 | | 10 | 80 | | 0,33 | |
| 7* | | 10 | | 90 | | | 2 |
| 8* | | 20 | | 80 | | | 2 |
| 9 | | 1 | 30 | 69 | | | 2 |
| 10 | | 3 | 20 | 77 | | | 2 |
| 11 | | 5 | 30 | 65 | | | 3 |
| 12 | | 10 | 10 | 80 | | | 3 |

| | | | | | | | |
|---|---|---|---|---|---|---|---|
| * - Vergleichsbeispiel | | | | | | | |

**Tabelle 2: Testergebnisse**

| Nr. | Repulpierbarkeit | Klebkraft (N/cm) | | | Rolling Ball (mm) | Spaltkraft | |
|---|---|---|---|---|---|---|---|
| | | Etikettenpapier | CaCO₃-Papier (sofort/nach Lagerung) | Tapetenoberpapier | | sofort | nach Lagerung (1 Monat bei 40 °C/80 % relativer Feuchte) |
| 1* | Nein | | | | | | |
| 2* | Nein | | | | | | |
| 3* | Ja | 7,7 | 6,42/3,73 | 6,2 | 208 | nicht bestimmt | nicht bestimmt |
| 4 | Ja | 7,8 | 7,0/7,0 | 8,2 | 56 | 29 | 27,2 |
| 5 | Ja | 8 | 6,5/6,0 | 7,95 | 78 | 29,2 | 27,5 |
| 6 | Ja | 8,4 | | 6,5 | 83 | 29,2 | 28,1 |
| 7* | Nein | | | | | | |
| 8* | Nein | | | | | | |
| 9 | Ja | 7,2 | | 7,7 | 41 | 26,9 | 44,1 |
| 10 | Ja | 7 | | 7,2 | 9 | 30,2 | 37,6 |
| 11 | Ja | 7,3 | 8,5/7,9 | 8,8 | 80 | 29,3 | 33,8 |
| 12 | ja | 6,3 | | 6,9 | 34 | 29,3 | 33,6 |

| | | | | | | | |
|---|---|---|---|---|---|---|---|
| * - Vergleichsbeispiel | | | | | | | |

## Patentansprüche

1. Haftklebmasse, enthaltend mindestens ein Polymer, dessen zugrundeliegende Monomerenzusammensetzung
a) 10 bis 30 Gew.-% mindestens einer Verbindung gemäß der Formel (I)
CH₂=CH-C(O)NR¹R² (I),
worin R¹ für eine unsubstituierte Alkylgruppe, eine Hydroxyalkylgruppe oder einen Acetonylrest und R² für ein Wasserstoffatom, eine unsubstituierte Alkylgruppe, eine Hydroxyalkylgruppe, einen Acetonylrest oder eine Aminoalkylgruppe stehen;
b) 60 bis 80 Gew.-% Ethyldiglycolacrylat; und
c) 0,5 bis 10 Gew.-% mindestens eines Monomers ausgewählt aus der Gruppe bestehend aus Acrylsäure, Methacrylsäure und (C₂-C₄-Hydroxyalkyl)acrylaten
umfasst.

2. Haftklebmasse gemäß Anspruch 1, **dadurch gekennzeichnet, dass** R¹ und R² voneinander unabhängig für eine unsubstituierte Alkylgruppe stehen.

3. Haftklebmasse gemäß einem der vorstehenden Ansprüche, **dadurch gekennzeichnet, dass** die Monomerenzusammensetzung als Monomer c) mindestens Acrylsäure oder 2-Hydroxyethylacrylat umfasst.

4. Haftklebmasse gemäß einem der vorstehenden Ansprüche, **dadurch gekennzeichnet, dass** das Polymer thermisch vernetzt ist.

5. Klebeband, umfassend eine Haftklebmasse gemäß einem der vorstehenden Ansprüche.

6. Verwendung einer Haftklebmasse gemäß einem der Ansprüche 1 bis 4 und/oder eines Klebebandes gemäß Anspruch 5 zur Herstellung wasserlöslicher Verklebungen.

## Claims

1. Pressure-sensitive adhesive comprising at least one polymer whose parent monomer composition comprises
a) 10 to 30 wt% of at least one compound of the formula (I)
CH₂=CH-C(O)NR¹R² (I),
in which R¹ is an unsubstituted alkyl group, a hydroxyalkyl group or an acetonyl radical and R² is a hydrogen atom, an unsubstituted alkyl group, a hydroxyalkyl group, an acetyl radical or an aminoalkyl group;
b) 60 to 80 wt% of ethyl diglycol acrylate; and
c) 0.5 to 10 wt% of at least one monomer selected from the group consisting of acrylic acid, methacrylic acid and (C₂-C₄-hydroxyalkyl) acrylates.

2. Pressure-sensitive adhesive according to Claim 1, **characterized in that** R¹ and R² independently of one another are an unsubstituted alkyl group.

3. Pressure-sensitive adhesive according to any of the preceding claims, **characterized in that** the monomer composition comprises as monomer c) at least acrylic acid or 2-hydroxyethylacrylate.

4. Pressure-sensitive adhesive according to any of the preceding claims, **characterized in that** the polymer is thermally crosslinked.

5. Adhesive tape comprising a pressure-sensitive adhesive according to any of the preceding claims.

6. Use of a pressure-sensitive adhesive according to any of Claims1 to 4 and/or of an adhesive tape according to Claim 5 for producing water-soluble bonds.

## Revendications

1. Matière adhésive, contenant au moins un polymère, dont la composition de monomères de base comprend
a) 10 à 30 % en poids d'au moins un composé selon la formule (I)
CH₂=CH-C(O)NR¹R² (I),
dans laquelle R¹ représente un groupe alkyle non substitué, un groupe hydroxyalkyle ou un radical acétonyle et R² représente un atome d'hydrogène, un groupe alkyle non substitué, un groupe hydroxyalkyle, un radical acétonyle ou un groupe aminoalkyle ;
b) 60 à 80 % en poids d'acrylate d'éthyldiglycol ; et
c) 0,5 à 10 % en poids d'au moins un monomère choisi dans le groupe constitué par l'acide acrylique, l'acide méthacrylique et les acrylates d'hydroxyalkyle(C₂-C₄).

2. Matière adhésive selon la revendication 1, **caractérisée en ce que** R¹ et R² représentent indépendamment l'un de l'autre un groupe alkyle non substitué.

3. Matière adhésive selon l'une quelconque des revendications précédentes, **caractérisée en ce que** la composition de monomères comprend en tant que monomère c) au moins de l'acide acrylique ou de l'acrylate de 2-hydroxyéthyle.

4. Matière adhésive selon l'une quelconque des revendications précédentes, **caractérisée en ce que** le polymère est réticulé thermiquement.

5. Ruban adhésif, comprenant une matière adhésive selon l'une quelconque des revendications précédentes.

6. Utilisation d'une matière adhésive selon l'une quelconque des revendications 1 à 4 et/ou d'un ruban adhésif selon la revendication 5 pour la production de collages solubles dans l'eau.
